# EUROPÄISCHE PATENTSCHRIFT

(11) **EP 0 751 704 B1**
(45) Veröffentlichungstag und Bekanntmachung des Hinweises auf die Patenterteilung: **16.09.1998**
(21) Anmeldenummer: 95913864.5
(22) Anmeldetag: 27.03.1995
(51) Int. Cl.: A01D 34/67

(54) **GERÄT ZUM SCHNEIDEN VON PFLANZEN**
PLANT CUTTING DEVICE
APPAREIL DESTINE A COUPER DES VEGETAUX

(30) Priorität: 30.03.1994 DE 4411001
(43) Veröffentlichungstag der Anmeldung: 08.01.1997
(73) Patentinhaber: ROBERT BOSCH GMBH, 70442 Stuttgart (DE)
(72) Erfinder: HOUBEN, Jan P., 4834 LV Breda (NL); JUNG, Bob, 4614 AK Bergen op Zoom (NL)
(86) Internationale Anmeldenummer: DE9500413
(87) Internationale Veröffentlichungsnummer: WO9526624

(56) Entgegenhaltungen:
- US-A- 4 202 094
- US-A- 4 490 910
- US-A- 4 640 084

## Beschreibung

### Stand der Technik

Die Erfindung bezieht sich auf ein Gerät zum Schneiden von Pflanzen nach der Gattung des Anspruchs 1 bzw. gemäß Anspruch 8 und 10 auf eine Spule für ein derartiges Gerät bzw. auf einen Ring für eine entsprechende Spule.

Durch die US-A-4,202,094 die den Oberbegriff der Ansprüche 1, 8 und 10 zeigt, ist ein Gerät zum Schneiden von Pflanzen mittels eines radial nach außen abstehenden, um eine Drehachse rotierenden Schneidfadens bekannt. Der Schneidfaden sitzt als Wicklung auf einer ringartigen Spule, die mittig zur Drehachse drehbar gelagert ist. Die Wicklung wird durch ein biegeschlaffes Band abstützend umgriffen und zusammenpreßt, das durch ein Gummiband am Lösen von der Wicklung gehindert wird. Damit sichert das Band die Wicklung gegen Aufspreizen und Verwickeln bei Drehung der Spule, ist aber umständlich und zeitaufwendig auf die Wicklung aufzubringen.

Außerdem läßt die abstützende Wirkung des Bandes nach, je mehr Fadenvorrat von der Wicklung abgespult ist.

Es ist auch schon ein Gerät zum Schneiden von Pflanzen gemäß DE-GM 69 38 265 bekannt, bei dem eine einen Schneidfaden tragende Spule auf ihrem Kreisumfang einen flexiblen Streifen trägt, der als geschlossener Ring ausgestaltet ist. Dieser umgreift die Schneidfadenwicklung lose, in einem radialen Abstand. Der Ring trägt eine durchgehende, radiale Öffnung, deren Rand den hindurchgeführten Schneidfaden eng umgreift. Der Ring hat die Aufgabe, ein selbsttätiges Abwickeln des Schneidfadens insbesondere dessen freien Endes von der Spule und dessen radiales Zurückschlüpfen in den Wickelraum zu verhindern, damit stets ein Stück des Schneidfadens radial aus der Spule herausragt und einer manuellen oder automatischen Längenverstellung zugänglich ist.

Der geschlossene Ring ist nur axial, nicht radial, auf die Spule aufsteckbar, wobei der Schneidfaden verhältnismäßig umständlich durch die zentrale Öffnung des Ringes eingefädelt werden muß. Der Ring liegt auch nicht unmittelbar und kraftschlüssig abstützend auf der Wicklung auf, sondern stützt sich auf dem Spulenkörper ab.

Gemäß US 4 104 796 ist ein weiteres Gerät zum Schneiden von Pflanzen bekannt, bei dem die Länge des freien Endes des Schneidfadens automatisch, fliehkraftgeregelt nachgestellt wird.

Die Fliehkraftregelung setzt bei kreisendem Schneidfaden, d. h. bei arbeitendem Motor dann ein, wenn ein Stück des freien Endes des Schneidfadens durch Verschleiß abgerissen ist. Wegen der Verkürzung des Schneidfadens ändern sich der Luftströmungswiderstand und das Massenträgheitsmoment der Spule und demzufolge auch deren Drehzahl. Die dabei auf das freie Fadenende wirkende erhöhte Fliehkraft zieht den Schneidfaden radial nach außen und versucht dabei die Spule gegenüber dem Gehäuse zu drehen. Dabei werden fliehkraftbetätigte Riegelmittel gelöst und geben die Spule gegenüber ihrem umgebenden Gehäuse frei, so daß sich die Spule um einen bestimmten Winkelbetrag gegenüber dem Gehäuse drehen kann. Durch diese Drehung verlängert sich das freie Ende des Schneidfadens radial nach außen. Diese Schritte der automatischen Schneidfadennachstellung wiederholen sich so oft, bis das freie Ende des Schneidfadens eine bestimmte vorgesehene Mindestlänge erreicht hat. Bei dieser Mindestlänge sind Massenträgheit und Luftströmungswiderstand so groß, daß sich die Drehzahl vermindert und infolgedessen die Fliehkraft zu gering ist, um die Riegelmittel zu lösen.

Bei der automatischen Fadennachstellung können ungewollte Änderungen des Massenträgheitsmoments der Fadenspule das Nachstellen des Schneidfadens stören. Dies kann z. B. dadurch geschehen, daß sich infolge der Drehzahländerung während der Fadennachstellung die Spulenwicklung im Wickelraum verlagert, d. h. radial oder axial verschiebt. Dadurch ändert sich die Massenverteilung an der Spule. Außerdem kann es dabei unter Umständen zu einem Verklemmen einiger Lagen der Spulenwicklung kommen, so daß der Schneidfaden gar nicht oder nur ungenügend lang nachgestellt werden kann. Daraus folgt eine nur unbefriedigende Schneidleistung des Geräts.

### Vorteile der Erfindung

Das erfindungsgemäße Gerät zum Schneiden von Pflanzen mit den kennzeichnenden Merkmalen des Anspruchs 1, die erfindungsgemäße Spule gemäß Anspruch 7, der Topf gemäß Anspruch 9 und der Ring gemäß Anspruch 10 haben den Vorteil, daß sich die Fadenwicklung im Wickelraum beim automatischen Fadennachstellen, beispielsweise durch Drehzahländerungen oder auch durch Rütteln beim Transport in ihrer Lage im Wickelraum nicht verändert.

Durch das zangenartige Zusammenpressen der Wicklung durch den offenen Ring bleiben bei normaler Drehzahl der Spule die Reibkräfte an den sich abwickelnden Schneidfadenlagen verhältnismäßig hoch und werden bei höherer Drehzahl geringer, weil sich dabei die Schenkel aufgrund der höheren Fliehkraft zu öffnen suchen. Dadurch ist die bei höherer Drehzahl einsetzende automatische Fadennachstellung besonders leichtgängig und störungsfrei möglich. Ein Zurückschlüpfen des Schneidfadens wird durch die Wirkung des offenen Rings ebenfalls verhindert.

Die erfindungsgemäße Spule ist besonders vorteilhaft maschinell automatisiert montierbar dadurch, daß der offene Ring radial statt wie bisher axial auf die Spule aufsteckbar ist. Die Funktion des Geräts ist dadurch verbessert, daß der Schneidfaden leichtgängig durch die weite, zentrale Öffnung des Ringes geführt wird. Die Handhabung beim Einlegen eines neuen Schneidfadens oder einer neuen Spule in das Gerät verbessert sich dadurch, daß der Schneidfaden radial durch einen Schlitz im Umfang des Ringes hindurch in dessen zentrale Öffnung eingelegt werden kann.

Weitere Vorteile der Erfindung ergeben sich aus den Merkmalen der abhängigen Ansprüche.

### Zeichnung

Ein Ausführungsbeispiel der Erfindung ist in der nachfolgenden Beschreibung anhand der Zeichnungen näher erläutert.

Es zeigen Figur 1 eine Explosionsdarstellung des unteren Teils des Geräts, Figur 2 eine seitliche Schnittansicht der Fadenspule mit dem Gehäuse, Figur 3 die Einzelheit des offenen Rings, Figur 4 eine Explosionsdarstellung einer Spule mit zwei Ringen, Figur 5 eine seitliche Schnittansicht der kompletten Spule mit Schneidfaden und Figur 6 eine Draufsicht auf diese Spule.

### Beschreibung des Ausführungsbeispiels

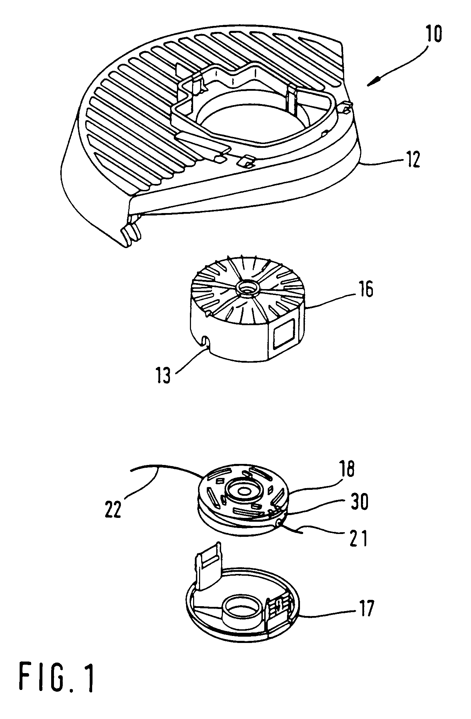

Die in Figur 1 gezeigte Explosionsdarstellung zeigt axial in der Reihenfolge von oben nach unten einen unteren Gehäuseteil 12 des Geräts 10 zum Schneiden von Pflanzen, ein als Topf 16 ausgestaltetes Gehäuse mit einer seiner beiden radialen Öffnungen 13, 15 zum Durchtritt von Schneidfäden 21, 22, eine Spule 18 mit den radial nach außen abstehenden Schneidfäden 21, 22 sowie einen von zwei Ringen 30, 40. Außerdem ist ein Deckel 17 erkennbar, der die Spule 18 gegen Herausfallen aus dem Topf 16 sowie gegen Eindringen von Schmutz und Feuchtigkeit in den Topf 16 sichert.

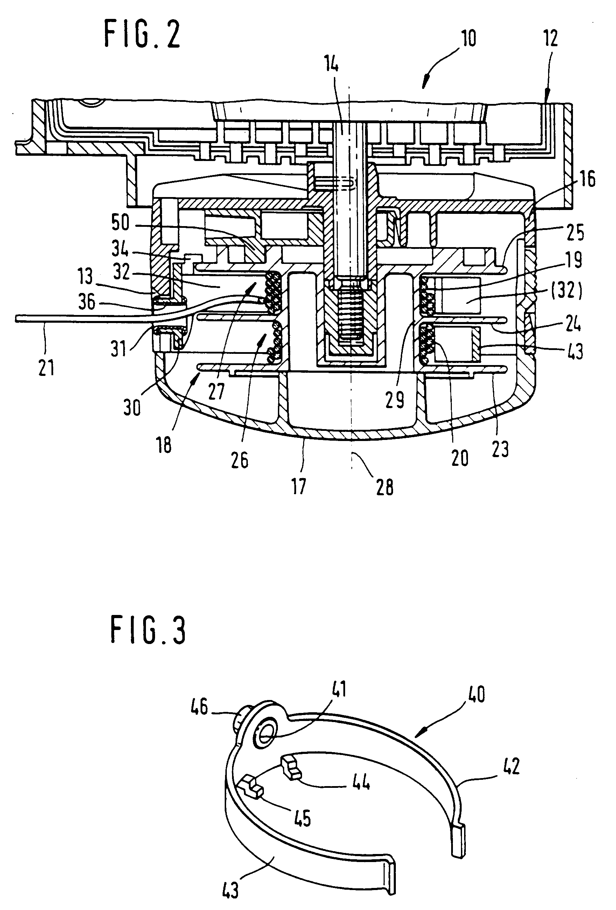

Die in Figur 2 dargestellte, seitliche Schnittansicht zeigt den unteren Bereich des Geräts 10 mit dem Gehäuseteil 12, eine Antriebswelle 14, die drehfest einen Topf 16 trägt, in dem mittig, drehbar gelagert eine Spule 18 angeordnet ist, die je eine Wicklung 19, 20 zweier Schneidfäden 21, 22 trägt.

Die Spule 18 besteht aus drei axial gleichmäßig beabstandeten Scheiben 23, 24, 25, die einen ersten und zweiten Wickelraum 26, 27 gemeinsam mit einer Nabe 29 bilden, die die Wicklungen 19, 20 aufnehmen. In den oberen zweiten Wickelraum 27 - in Betrachtungsrichtung von links - ist zwischen die Scheiben 23, 24 ein erster offener Ring 30 radial gesteckt. Dessen Schenkel 32, 33 umgreifen die Wicklung 19 zangenartig und stützen sich dabei auf deren Umfang ab. Im axial unter den zweiten Wickelraum 27 angeordneten ersten Wickelraum 26 stützt sich analog zum ersten Ring 30 ein identischer zweiter Ring 40 mit Schenkeln 42, 43 radial auf der zweiten Wicklung 20 ab. Die Ringe 30, 40 tragen je eine mittige, radiale Durchtrittsöffnung 31, 41. Die Durchtrittsöffnungen 31, 41 werden durch Hohlnieten gebildet und erlauben einen leichtgängigen Durchtritt der Schneidfäden 21, 22.

Da die Figur 2 einen auf 180° aufgeklappten 90°-Schnitt darstellt, ist nur die Durchtrittsöffnung 31 des ersten Ringes 30 und nur dessen einer Schenkel 32 erkennbar, wobei die Ansicht der rechten Hälfte, bestimmt durch die Symmetrieachse 28, sich um 90° in die Zeichenebene zurückgedreht vorzustellen ist. Aufgrund dieser Darstellung ist auch nur ein Schenkel 43 des zweiten Ringes 40 erkennbar.

Der Topf 16 ist durch einen Deckel 17 verschlossen, der die axiale Lage der Spule 18 bzw. diese gegen Verlieren sichert und Schmutzeintritt verhindert.

Ein Schieber 50 ist drehfest verschieblich am Topf 16 gelagert. Dieser dient der automatischen Fadennachstellung, wobei er fliehkraftgeregelt, drehzahlabhängig mit nicht näher bezeichneten Nocken nicht näher bezeichnete Anschläge der Spule 18 freigeben oder sperren kann.

In Figur 3 ist der zweite Ring 40 als Einzelheit räumlich dargestellt. Dessen Schenkel 42, 43, die Durchtrittsöffnung 41 und die Krallen 44, 45 sind deutlich erkennbar. Die nicht näher bezeichneten Schenkelenden verlaufen nach außen gekrümmt.

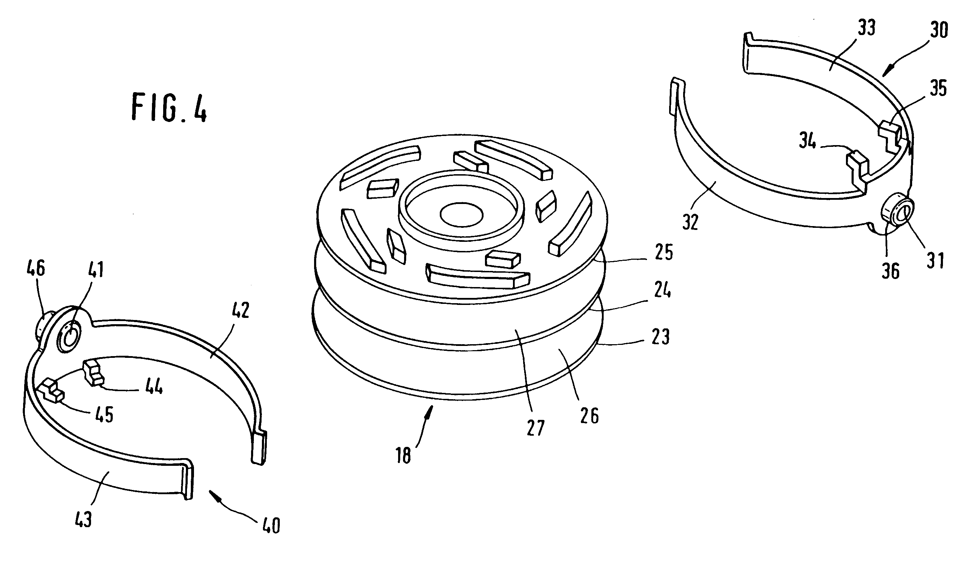

In Figur 4 zeigt eine Explosionsdarstellung die Spule 18 mit den beiden Ringen 30, 40, wobei die Scheiben 23, 24, 25, die Wickelräume 26, 27 und die übrigen vorstehend beschriebenen Einzelheiten der Ringe 30, 30, die Schenkel 32, 33; 42, 43, die Durchtrittsöffnungen 31, 41, die Krallen 34, 35; 44, 45 und die rohrartigen Vorsprünge 36, 46 erkennbar sind. Außerdem ist erkennbar, daß die Ringe 30, 40 so auf der Spule 18 angeordnet sind, daß die Durchtrittsöffnungen 31, 41 in diametral entgegengesetzte Richtungen zeigen zum entsprechenden Durchtritt des hier nicht dargestellten Schneidfadens. In dieser Position können die rohrartigen Vorsprünge 36, 46, in den radialen Öffnungen 13, 15 des Topfes 16 formschlüssig festgehalten bzw. zentriert werden.

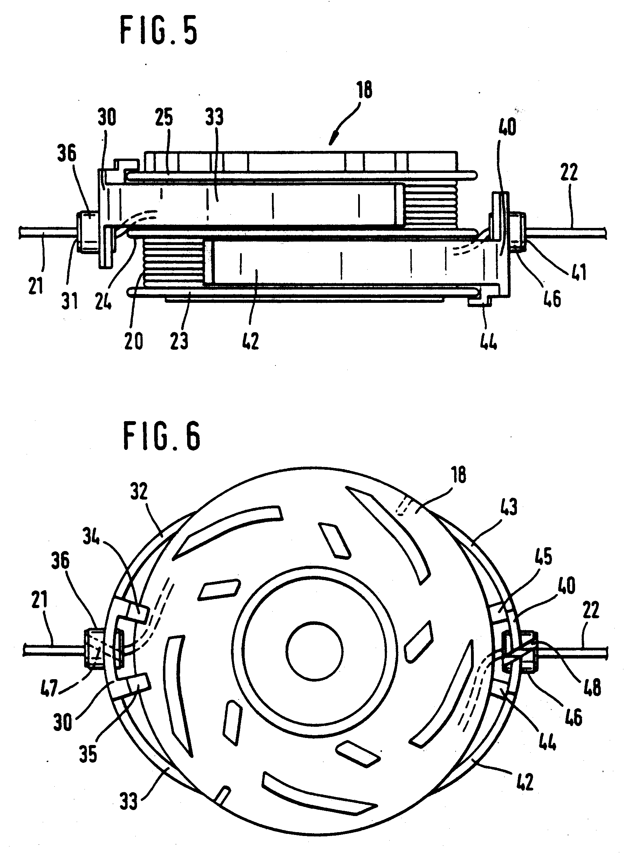

Die Figuren 5, 6 zeigen die Einzelheit der Spule 18 gemäß Figur 2 im seitlichen Schnitt bzw. in der Draufsicht, wobei die Scheiben 23, 24, 25, die Wicklungen 19, 20 und ihre nach außen tretenden freien Enden des Scheidfadens 21, 22 zu erkennen sind. Dabei wird die Anordnung der Ringe 30, 40 zwischen den Scheiben 23, 24, 25 und die Anordnung der Krallen 34, 35; 44, 45 gegenüber den Scheiben 23, 25 deutlich, ebenso wie der rohrartige Vorsprung 36, 46 zum Durchtritt des Schneidfadens 21, 22. Außerdem ist zu erkennen, daß der Ring 30, 40 am Umfang seiner Durchtrittsöffnungen 31, 41 je einen radial durchgehenden, axial schrägen Schlitz 47, 48 tragen, durch den der Schneidfaden 21, 22 seitlich von außen bequem in die Durhtrittsöffnung eingelegt werden kann. Das freie Ende des Schneidfadens 21, 22 ist verhältnismäßig steif und infolge der Steifigkeit unverlierbar in der Durchtrittsöffnung gesichert, weil er zwar von Hand schräg eingelegt, aber nicht selbst die zum Wiederaustritt notwendige Schräglage einnehmen kann.

Die Ringe 30, 40 werden durch radiales Aufstecken montiert. Ihre Schenkel 32, 33; 42, 43 umgreifen den Umfang der Fadenwicklung 19, 20 und stützen sich daran federnd ab. Vor dem radialen Aufstecken der Ringe 30, 40 werden die freien Enden der Schneidfäden 21, 22 durch die Durchtrittsöffnungen 31, 41 gesteckt, so daß sie radial nach außen treten. Die Ringe 30, 40 werden außerdem radial so weit auf die Spule 18 geschoben, daß ihre Krallen 34, 35; 44, 45 die Scheibe 23 bzw. 25 axial und radial anschlagend übergreifen. Die Spule 18 mit den Ringen 30, 40 wird mittig so im Topf 16 positioniert, daß deren Durchtrittsöffnungen 31, 41 formschlüssig in die radialen Öffnungen 13, 15 des Topfes 16 eingreifen.

Die Ringe 30, 40 sind so dimensioniert und berechnet, daß deren Schenkel über den gesamten möglichen Drehzahlbereich der Spule 18 die Wicklungen 19, 20 beaufschlagen und abstützen. Bei hoher Drehzahl suchen sich die Schenkel fliehkraftbedingt zu öffnen, so daß die Ahstützkraft auf die Wicklung und damit die Reibung beim Nachstellen des Schneidfadens, - d.h. bei hoher Drehzahl - , geringer wird. Durch die sichere Fadenlage ist eine optimale Reibkraft und ein günstiges Regelverhalten bei der automatischen Fadennachstellung gesichert.

Dadurch, daß sich die Ringe 30, 40 über die ganze Breite und verhältnismäßig großflächig gegenüber der Spule 18 und gegenüber den Wicklungen 19, 20 abstützen, ist ein Verkanten oder Verklemmen der Ringe 30, 40 gegenüber der Spule 18 auszuschließen. Auch das trägt dazu bei, daß die automatische Fadennachstellung besonders zuverlässig und sicher arbeitet.

## Patentansprüche

1. Gerät zum Schneiden von Pflanzen mit mindestens einem um eine Drehachse (28) kreisenden, radial von dieser nach außen abstehenden, eine Schneidebene definierenden freien Ende eines Schneidfadens (21, 22), der eine Wicklung (19, 20) in einem Wickelraum (26, 27) einer Spule (18) bildet, der durch axial zueinander beabstandete, auf einer Nabe (29) angeordnete Scheiben (23, 24, 25) begrenzt ist, wobei ein die Spule (18) zur Drehmitnahme aufnehmender Topf (16) an seinem Umfang mindestens eine Öffnung (13, 15) aufweist, durch die der Schneidfaden (21, 22) radial nach außen tritt, wobei er auf eine bestimmte Länge nachstellbar ist, insbesondere bei Verkürzung des freien Endes durch Abnutzung, dadurch gekennzeichnet, daß die Spule (18) mindestens einen elastischen offenen Ring (30, 40) trägt, der die Wicklung (19, 20) des Schneidfadens (21, 22), im wesentlichen auf ganzer Breite, abstützend umgreift und zusammenpreßt.

2. Gerät nach Anspruch 1, dadurch gekennzeichnet, daß sich der Ring (30, 40) mit mindestens zwei elastischen Schenkeln (32, 33, 42, 43) an der Wicklung (19, 20) abstützt und etwa in der Mitte zwischen den Schenkeln (33, 34, 43, 44) eine Durchtrittsöffnung (31, 41) besitzt, durch die das freie Ende des Schneidfadens (21, 22) führbar ist.

3. Gerät nach Anspruch 1 oder 2, dadurch gekennzeichnet, daß sich der Ring (30, 40) mit den Schenkeln (32, 33; 42, 43), insbesondere mit deren Stirnseiten, zwischen zwei den Wickelraum (26, 27) begrenzende Scheiben (23, 24, 25) mit geringem Spiel axial abstützt und dadurch gegen Kippen gesichert ist.

4. Gerät nach einem der Ansprüche 1 bis 3, dadurch gekennzeichnet, daß der Ring (30, 40) etwa in der Mitte zwischen den Schenkeln, an einer Stirnseite mindestens eine Kralle (34, 35, 44, 45) tragt, mit der er sich axial und/oder radial an einer der Scheiben (23, 24, 25) abstützt.

5. Gerät nach einem der Ansprüche 1 bis 5, dadurch gekennzeichnet, daß bei mehreren nebeneinander auf der Spule (18) angeordneten Wicklungen (19, 20) jeder Wicklung (19, 20) ein Ring (30, 40) zugeordnet ist.

6. Gerät nach einem der vorhergehenden Ansprüche, dadurch gekennzeichnet, daß der Ring (30, 40) drehbar gegenüber der Spule (18) angeordnet ist.

7. Gerät nach einem der Ansprüche 1 bis 6, dadurch gekennzeichnet, daß der Topf (16) auf seinem Umfang auf gegenüberliegenden Seiten mindestens je eine Öffnung (13, 15) trägt, die den Ring (30, 40), insbesondere im Bereich seiner Öffnung (31, 41), formschlüssig festhält.

8. Spule für ein Gerät nach dem Oberbegriff des Anspruchs 1, dadurch gekennzeichnet, daß die Wicklung (19, 20) des Schneidfadens (21, 22) in ganzer Breite von einem offenen Ring (30, 40) spangenförmig elastisch umgriffen und zusammengepreßt wird.

9. Spule nach Anspruch 7, dadurch gekennzeichnet, daß der Ring (30, 40) am Umfang seiner Durchtrittsöffnung (31, 41) durchgehende, radiale, axial schräg verlaufende Schlitze (47, 48) zum radialen Durchtritt des Schneidfadens (21, 22) bei dessen Einlegen trägt.

10. Ring für eine Spule nach dem Oberbegriff des Anspruchs 7, dadurch gekennzeichnet, daß er offen ist und die zwei Schenkeln (32, 33; 42, 43) so ausgebildet sind, daß sie die Wicklung (19, 20) der Spule beaufschlagt.

11. Ring nach Anspruch 10, dadurch gekennzeichnet, daß er eine radiale Durchtrittsöffnung (31, 41) für den Scheidfaden (21, 22) trägt, welche einen radialen Vorsprung (36, 46) nach außen bildet.

12. Ring nach Anspruch 10 oder 11, dadurch gekennzeichnet, daß die Elastizität seiner Schenkel (33, 34, 43, 44) so gewählt ist, daß sie bei Normaldrehzahl die Wicklung (19, 20) beaufschlagen und bei einer für die Fadennachstellung wirksamen erhöhten Drehzahl die Wicklung (19, 20) freigeben.

## Claims

1. Plant-cutting device having at least one free end of a cutting filament (21, 22), it being the case that said free end rotates about an axis of rotation (28), projects radially outwards from this axis and defines a cutting plane, and the cutting filament forms a coil (19, 20) in a winding chamber (26, 27) of a reel (18), and the winding chamber is bounded by axially spaced-apart discs (23, 24, 25) arranged on a hub (29), a cup (16), which receives the reel (18) in order to carry it along in rotation, having, on its circumference, at least one opening (13, 15) through which the cutting filament (21, 22) passes radially outwards, it being possible for said cutting filament to be readjusted to a certain length, in particular when the free end is shortened as a result of wear, characterized in that the reel (18) bears at least one open elastic ring (30, 40) which, in a supporting manner, engages around the coil (19, 20) of the cutting filament (21, 22), and compresses it, essentially over its entire width.

2. Device according to Claim 1, characterized in that the ring (30, 40) is supported on the coil (19, 20) by way of at least two elastic legs (32, 33, 42, 43) and, approximately in the centre between the legs (33, 34, 43, 44), has a through-passage opening (31, 41) through which the free end of the cutting filament (21, 22) can be guided.

3. Device according to Claim 1 or 2, characterized in that the ring (30, 40) is supported axially, with a small amount of play, by way of the legs (32, 33, 42, 43), in particular by way of the end sides thereof, between two discs (23, 24, 25) bounding the winding chamber (26, 27), and is thereby secured against tilting.

4. Device according to one of Claims 1 to 3, characterized in that approximately in the centre between the legs, on an end side, the ring (30, 40) bears at least one claw (34, 35, 44, 45), by means of which it is supported axially and/or radially on one of the discs (23, 24, 25).

5. Device according to one of Claims 1 to 5, characterized in that, if a plurality of coils (19, 20) are arranged one beside the other on the reel (18), each coil (19, 20) is assigned a ring (30, 40).

6. Device according to one of the preceding claims, characterized in that the ring (30, 40) is arranged rotatively with respect to the reel (18).

7. Device according to one of Claims 1 to 6, characterized in that, on opposite sides of its circumference, the cup (16) has in each case at least one opening (13, 15) which secures the ring (30, 40) in a positively locking manner, in particular in the region of the ring opening (31, 41).

8. Reel for a device according to the preamble of Claim 1, characterized in that the coil (19, 20) of the cutting filament (21, 22) has an open ring (30, 40) elastically engaging round in the form of a clasp, and compressing it, over its entire width.

9. Reel according to Claim 8, characterized in that, on the circumference of its through-passage opening (31, 41), the ring (30, 40) has continuous, radial slits (47, 48) which slope in the axial direction and are intended for the radial through-passage of the cutting filament (21, 22) upon introduction of the latter.

10. Ring for a reel according to the preamble of Claim 8, characterized in that it is open and the two legs (32, 33; 42, 43) are designed such that they act on the coil (19, 20) of the reel.

11. Ring according to Claim 10, characterized in that it has a radial through-passage opening (31, 41) which is intended for the cutting filament (21, 22) and forms a radial protrusion (36, 46) in the outward direction.

12. Ring according to Claim 10 or 11, characterized in that the elasticity of its legs (33, 34, 43, 44) is selected such that in the event of normal rotational speed the legs act on the coil (19, 20) and in the event of increased rotational speed, which comes into effect for the readjustment of the filament, the legs release the coil (19, 20).

## Revendications

1. Outil pour couper des végétaux comprenant au moins un fil de coupe (21, 22) dont l'extrémité libre définit un plan de coupe et qui est radialement en saillie vers l'extérieur et tourne autour d'un axe de rotation (28), ce fil formant un enroulement (19, 20) dans une chambre d'enroulement (26, 27) d'une bobine (18), cette chambre étant délimitée par des disques (23, 24, 25) écartés axialement et portés par un moyeu (29),
un pot (16) avec un moyen d'entraînement en rotation recevant la bobine (18), ce pot ayant à sa périphérie au moins une ouverture (13, 15) à travers laquelle le fil de coupe (21, 22) sort radialement, et s'allonge jusqu'à une certaine longueur, notamment lorsque son extrémité libre est raccourcie par l'usure,
caractérisé en ce que
la bobine (18) porte au moins un anneau élastique ouvert (30, 40) qui entoure l'enroulement du fil de coupe (21, 22) en s'appuyant pratiquement sur toute sa largeur et comprime cet enroulement.

2. Outil selon la revendication 1,
caractérisé en ce que
l'anneau (30, 40) s'appuie par au moins deux branches élastiques (32, 33, 42, 43) sur l'enroulement (19, 20) et possède sensiblement au milieu, entre les branches (33, 34, 43, 44), un orifice de passage (31, 41) par lequel passe l'extrémité libre du fil de coupe (21, 22).

3. Outil selon la revendication 1 ou 2,
caractérisé en ce que
l'anneau (30, 40) s'appuie par les branches (32, 33 ; 42, 43), notamment avec leurs faces frontales, entre deux disques (23, 24, 25) délimitant la chambre d'enroulement (26, 27), en s'appuyant avec un faible jeu axial et en étant protégé contre le basculement.

4. Outil selon l'une des revendications 1 à 3,
caractérisé en ce que
l'anneau (30, 40) porte sensiblement au milieu, entre les branches, sur une face frontale, au moins une griffe (34, 35, 44, 45) par laquelle il s'appuie axialement et/ou radialement contre l'un des disques (23, 24, 25).

5. Outil selon l'une des revendications 1 à 5,
caractérisé en ce que
dans le cas de plusieurs enroulements (19, 20) juxtaposés sur la bobine (18), chaque enroulement (19, 20) est équipé d'un anneau (30, 40).

6. Outil selon l'une quelconque des revendications précédentes,
caractérisé en ce que l'anneau (30, 40) peut tourner par rapport à la bobine (18).

7. Outil selon l'une des revendications 1 à 6,
caractérisé en ce que
le pot (16) porte à sa périphérie, sur les côtés opposés, au moins une ouverture (13, 15) qui maintient, par une liaison par la forme, l'anneau (30, 40) notamment au niveau de son ouverture (31, 41).

8. Bobine pour un outil selon le préambule de la revendication 1,
caractérisée en ce que
l' enroulement (19, 20) du fil de coupe (21, 22) est entouré élastiquement à la manière d'une pince sur toute la largeur par un anneau ouvert (30, 40) qui comprime l'enroulement.

9. Bobine selon la revendication 8,
caractérisée en ce que
l'anneau (30, 40) comporte, à la périphérie de ses orifices traversants (31, 41), des fentes (47, 48) continues, radiales, dirigées axialement en biais, pour permettre le passage radial du fil de coupe (21, 22) lors de la mise en place de celui-ci.

10. Anneau pour une bobine selon le préambule de la revendication 8,
caractérisé en ce qu'
il est ouvert et les deux branches (32, 33 42, 43) sont réalisées pour s'appliquer sur l'enroulement (19, 20) de la bobine.

11. Anneau selon la revendication 10,
caractérisé en ce qu'
il porte un orifice traversant radial (31, 41) pour le fil de coupe (21, 22) formant une saillie (36, 46) radiale vers l'extérieur.

12. Anneau selon la revendication 10 ou 11,
caractérisé en ce que
l'élasticité de ses branches (33, 34, 43, 44) est choisie pour qu'à une vitesse de rotation normale les branches agissent sur l'enroulement (19, 20) et qu'elles libèrent l'enroulement (19, 20) pour l'allongement du fil lorsque la vitesse de rotation augmente.
